# FASCICULE DE BREVET EUROPEEN

(11) **EP 1 237 417 B1**
(45) Date de publication et mention de la délivrance du brevet: **28.07.2004**
(21) Numéro de dépôt: 00988948.6
(22) Date de dépôt: 18.12.2000
(51) Int. Cl.: A23B 9/18, A23B 9/30, A23B 9/32, B02B 1/00, A21D 2/04, A21D 6/00

(54) **PROCEDE ET INSTALLATION POUR LA FABRICATION DE FARINE A PARTIR DE GRAINS TRAITES A L'OZONE**
VERFAHREN UND VORRICHTUNG ZUR HERSTELLUNG VON MEHL AUS OZON-BEHANDELTEN GETREIDEKÖRNERN
METHOD AND INSTALLATION FOR MAKING FLOUR FROM OZONE-TREATED GRAINS

(30) Priorité: 17.12.1999 FR 9915955
(43) Date de publication de la demande: 11.09.2002
(73) Titulaire: Green Technologies Sarl, 35400 Saint Malo (FR)
(72) Inventeur: YVIN, Jean-Claude, F-35400 Saint Malo (FR); BAILLI, Alain, F-95180 Menucourt (FR); JOUBERT, Jean-Marie, F-35400 Saint Malo (FR); BERTAUD, Olivier, F-92100 Boulogne (FR)
(74) Mandataire: Hubert, Philippe
(86) Numéro de dépôt international: PCT/FR2000/003573
(87) Numéro de publication internationale: WO 2001/043556

(56) Documents cités:
- WO-A-99/39723
- DE-A- 4 426 648
- US-A- 2 379 677
- DATABASE WPI Derwent Publications Ltd., London, GB; AN 2000-674499 XP002165161 "Disinfecting cereals" & HU 9 802 613 A (BUCSKY, GYENIS, LASZLO, UJHIDY), 28 août 2000 (2000-08-28)
- DATABASE WPI Derwent Publications Ltd., London, GB; AN 1984-104758 XP002165162 "Improving wheat flour quality" & JP 59 048040 A (HOUSE FOOD INDUSTRIAL), 19 mars 1984 (1984-03-19)
- NAITO, SAWADA, YAMAGUCHI: "Studies on utilization of ozone in ffod preservation" JOURNAL OF ANTIBACTERIAL AND ANTIFUNGAL AGENTS, vol. 17, no. 11, 1989, pages 517-526, XP000992792
- DATABASE WPI Derwent Publications Ltd., London, GB; AN 1998-012217 XP002145926 "Grain processing-comprises using ozone solution in washing" & JP 09 275916 A (SHOKUHIN SANG YO KANKYO HOZEN G), 28 octobre 1997 (1997-10-28)

## Description

La présente invention a pour objet un nouveau procédé de fabrication de farines destinées à l'alimentation humaine ou animale et présentant un haut niveau de sécurité alimentaire.

Elle concerne également une installation spécifiquement adaptée pour la mise en oeuvre de ce procédé.

L'invention trouve notamment application dans le domaine de la meunerie industrielle, de la meunerie spécialisée, dans l'élaboration de farines spécifiques ainsi que dans la fabrication industrielle de produits de boulangerie et d'aliments pour animaux.

On sait que les grains provenant notamment de céréales et destinés à la production de farines présentent, avant mouture, lorsqu'ils sont utilisés à l'état naturel, un certain nombre de polluants d'origine tellurique, ou provenant d'une pollution lors du stockage.

Ces polluants sont généralement situés à la périphérie des grains et se présentent sous la forme de germes, de bactéries, de résidus de pesticides, de mycotoxines, de spores diverses.

Lors de la phase de mouture, le tégument périphérique pollué est mis en contact intime avec la farine obtenue par broyage de la partie interne du grain. Durant cette opération, la pollution périphérique contamine donc les farines, ce qui se traduit par des problèmes de sécurité alimentaire, de conservation, de mise en oeuvre, qui, dans certains cas, peuvent rendre les farines ainsi obtenues impropres à la consommation.

Les meuneries, qu'elles soient artisanales ou industrielles, sont aujourd'hui confrontées à ces problèmes de contamination et diverses solutions ont été préconisées pour y remédier.

Ainsi, il a été proposé de soumettre les grains avant mouture :
- soit à un traitement physique par ionisation ;
- soit à un traitement chimique, notamment par le peroxyde d'hydrogène.

Cependant, ces deux techniques présentent divers inconvénients qui en ont empêché l'usage généralisé.

En effet, l'ionisation implique l'utilisation de sources radioactives parfaitement maîtrisées, géographiquement situées en des lieux privilégiés qui ne correspondent pas aux lieux de production des farines. Le coût du transport en résultant, qui s'ajoute au coût du traitement proprement dit, rend l'ionisation extrêmement coûteuse et contraignante, de sorte que son utilisation reste limitée à quelques usages très spécifiques mettant en oeuvre de très petites quantités de grains.

Par ailleurs, le traitement chimique des grains par le peroxyde d'hydrogène, n'est pas parfaitement satisfaisant, dans la mesure où il s'accompagne d'une reviviscence bactérienne après traitement et nécessite, en raison de la nature de ce réactif, des précautions particulières de mise en oeuvre et une maitrise difficilement compatible avec l'usage envisagé.

Des agents chimiques autres que le peroxyde d'hydrogéne ont également été envisagés pour des traitements de décontamination des grains, parmi lesquels on citera :
- le chlore et les agents chlorés, dont les propriétés mutagènes et cancérigènes récemment mises en évidence en limitent de fait l'utilisation ;
- l'acide peracétique dont l'utilisation entraine une diminution des qualités organoleptiques des grains et nécessite une mise en oeuvre maîtrisée difficilement compatible avec l'usage envisagé.

On sait par ailleurs que l'ozone produit à partir de gaz vecteurs, qui peuvent être indifféremment l'oxygène de l'air, l'oxygène pur ou un mélange en proportion variable des deux, présente des propriétés stérilisantes qui ont été largement mise à profit dans le traitement des eaux destinées à la consommation humaine, ainsi qu'en milieu industriel (pisciculture, conchyliculture, pharmacie et chimie fine).

L'utilisation de l'ozone a également été préconisée notamment dans le brevet FR n° 93 11776 dans le cadre du traitement des semences et des bulbes mais seulement dans le but d'améliorer la germination.

L'utilisation d'ozone sous forme gazeuse pour la stérilisation des grains avant le broyage est connue de US 2 379 677 par exemple, ou pour le traitement de produits alimentaires pulvérulents par DE 4 426 648.

Dans ces conditions, la présente invention a pour but de résoudre le problème technique consistant en la fourniture d'un nouveau procédé de fabrication de farines présentant un haut niveau de sécurité alimentaire qui puisse être mis en oeuvre de façon relativement aisé, directement sur les sites de fabrication et quelles que soient les quantités de grains à traiter, et ce, tout en conservant les qualités technologiques des farines nécessaires notamment en panification.

Il a été découvert, et ceci constitue le fondement de la présente invention, qu'il était possible de décontaminer les grains avant mouture et même d'améliorer de façon très significative les qualités des farines obtenues par broyage de ces grains, ainsi que les qualités des sous-produits, par un traitement préalable desdits grains avec de l'ozone produit à partir d'un gaz vecteur, et ceci sans l'aide d'agents de traitement complémentaires, et dans des conditions de mise en oeuvre, en particulier de durée, compatibles avec un usage industriel continu.

Ainsi, selon un premier aspect, la présente invention a pour objet un procédé de fabrication de farines présentant un haut niveau de sécurité alimentaire comprenant le broyage de grains préalablement nettoyés et humidifiés, caractérisé en ce que, préalablement ou simultanément audit broyage, on met lesdits grains en contact avec de l'ozone produit à partir d'un gaz vecteur, de préférence en une quantité comprise en 0,5 et 20 exprimée en grammes d'ozone par kilo de grains.

Ce procédé permet de résoudre pour la première fois et de façon entièrement satisfaisante le problème de la contamination des farines auquel les meuneries sont confrontées.

Il est connu dans les techniques meunières, que pour obtenir un bon broyage, il est nécessaire d'humidifier les grains avant de procéder à l'opération de mouture. Cette humidification est effectuée à ce jour avec de l'eau non traitée et la phase d'humidification est généralement suivie d'une phase de repos durant laquelle le développement des souches présentes est encore favorisé en raison de l'humidité apportée.

Selon une caractéristique particulière du procédé conforme à l'invention, l'eau servant à l'humidification des grains est préalablement traitée par de l'ozone.

On a en effet constaté que ce traitement préalable par l'ozone, de l'eau servant à l'humification des grains, permettait d'améliorer encore les effets bénéfiques observés par le seul traitement préalable des grains en voie sèche et d'éviter de façon surprenante la reviviscence des souches présentes à la périphérie du tégument lors de la phase de repos précitée.

On a également constaté, de façon inattendue, par des tests classiques de panification, que les pâtes fabriquées à partir de farine issues des grains ayant subi ce traitement préalable présentaient des caractéristiques améliorées, particulièrement adaptées pour la fabrication de produits sucrés du type cake anglais ou génoise, de type mixe pour enrobage (beignets, panure,...) et de produits de panification industrielle.

Un deuxième objet de l'invention consiste donc en l'utilisation de la farine ainsi traitée pour la fabrication de ces produits.

Cette mise en oeuvre particulière du procédé conforme à la présente invention, combinant un traitement en voie sèche et un traitement en voie humide des grains avant mouture constitue un mode de réalisation actuellement préféré de l'invention.

Selon une caractéristique particulière du procédé conforme à l'invention, la durée de mise en contact des grains avec l'ozone est comprise entré 5 et 70 min, et de préférence entre 15 et 40 min.

Selon une autre caractéristique particulière, l'ozone utilisé est produit à partir d'un gaz vecteur sec et en ce que la concentration de l'ozone dans le gaz vecteur est comprise entre 80 et 160 g/m³ TPN, et de préférence entre 100 et 120 g/m³ TPN.

Selon encore une autre caractéristique particulière, la pression du gaz vecteur ozoné lors de la mise en contact avec les grains est comprise entre 200 et 500 mbar.

Selon un troisième aspect, la présente invention a pour objet une installation spécifiquement destinée à la mise en oeuvre du procédé qui vient d'être décrit.

Cette installation, du type comportant des moyens de stockage et éventuellement de mélange des grains, des premiers moyens de nettoyage des grains ainsi stockés et éventuellement mélangés, des moyens d'humidification des grains, des moyens de mise en repos des grains ainsi humidifiés, des seconds moyens de nettoyage des grains après repos, des moyens de broyage des grains, est essentiellement caractérisée en ce qu'elle comporte en outre des moyens de mise en contact des grains avec de l'ozone produit à partir d'un gaz vecteur, disposés en amont ou au niveau des moyens de broyage.

L'invention sera mieux comprise, et d'autres buts, caractéristiques et avantages de celle-ci apparaîtront plus clairement à la lecture de la description explicative qui va suivre, faite en référence aux exemples et aux dessins schématiques annexés donnés uniquement à titre non limitatif et dans lesquels :
- la figure 1 illustre de façon schématique un procédé et une installation traditionnels pour la fabrication de farines;
- la figure 2 est une vue semblable à la figure 1 d'un procédé et d'une installation de fabrication de farines conformes à la présente invention ; et
- la figure 3 est une vue en coupe longitudinale d'un réacteur de mise en contact spécifiquement adapté pour la mise en contact des grains avec de l'ozone dans le cadre de la présente invention.

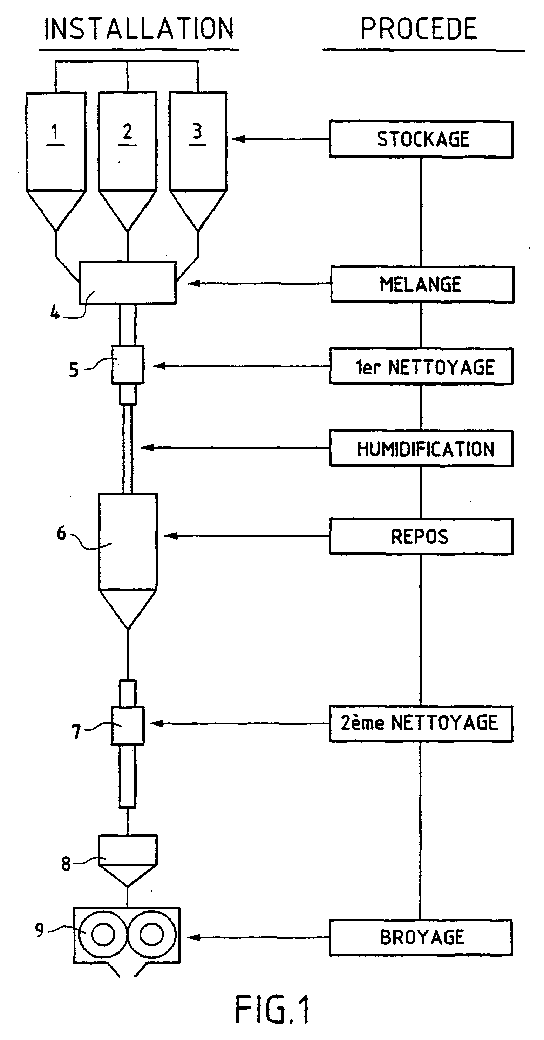

En référence à la figure 1, on décrira donc tout d'abord un procédé et une installation de fabrication de farines conformes à l'état connu de la technique.

Des grains, par exemple des grains de blé, issus du milieu agricole, sont stockés dans des silos de stockage respectivement désignés par les chiffres de référence 1, 2 et 3 dans l'exemple représenté, et dont le nombre peut être librement choisi pour être parfaitement adapté à la structure industrielle du site ainsi qu'à l'autonomie requise.

Ces grains présentent à l'état naturel une humidité résiduelle qui est généralement de l'ordre de 13 % dans le cas du blé.

Lorsque l'on souhaite fabriquer des farines à partir de différentes variétés de blé, les grains ainsi stockés, sont mélangés dans un dispositif mélangeur 4.

Les grains sont ensuite soumis à une première phase de nettoyage destinée notamment à séparer les particules les plus légères, par exemple par soufflage, au moyen d'un dispositif approprié 5 bien connu de l'homme de métier.

Après cette première phase de nettoyage, les grains sont humidifiés par apport d'eau et brassés.

La quantité d'eau apportée aux grains est ajustée de telle sorte que l'humidité résiduelle des grains, mesurée par exemple par hydrométrie ou par pesage, soit optimale pour procéder à l'opération de mouture, c'est-à-dire de l'ordre de 18 %, dans le cas du blé.

Les grains ainsi humidifiés sont soumis à une phase dite "de repos" dans un silo 6 pendant une durée généralement comprise entre 8 et 36 h.

Après cette phase de repos, les grains sont soumis à une deuxième phase de nettoyage, qui peut également être effectuée par soufflage, au moyen d'un dispositif approprié 7.

Cette deuxième phase de nettoyage permet notamment de récupérer, en tant que sous-produit, les enveloppes des grains (sons) utilisées pour l'alimentation animale.

Les grains ainsi humidifiés et nettoyés sont soumis à une phase de broyage dans un broyeur 9 qui peut être de type bien connu de l'homme de métier.

L'alimentation en continu du broyeur 9 peut être réalisée, d'une façon connue en soi, par l'utilisation d'un silo tampon intermédiaire 8.

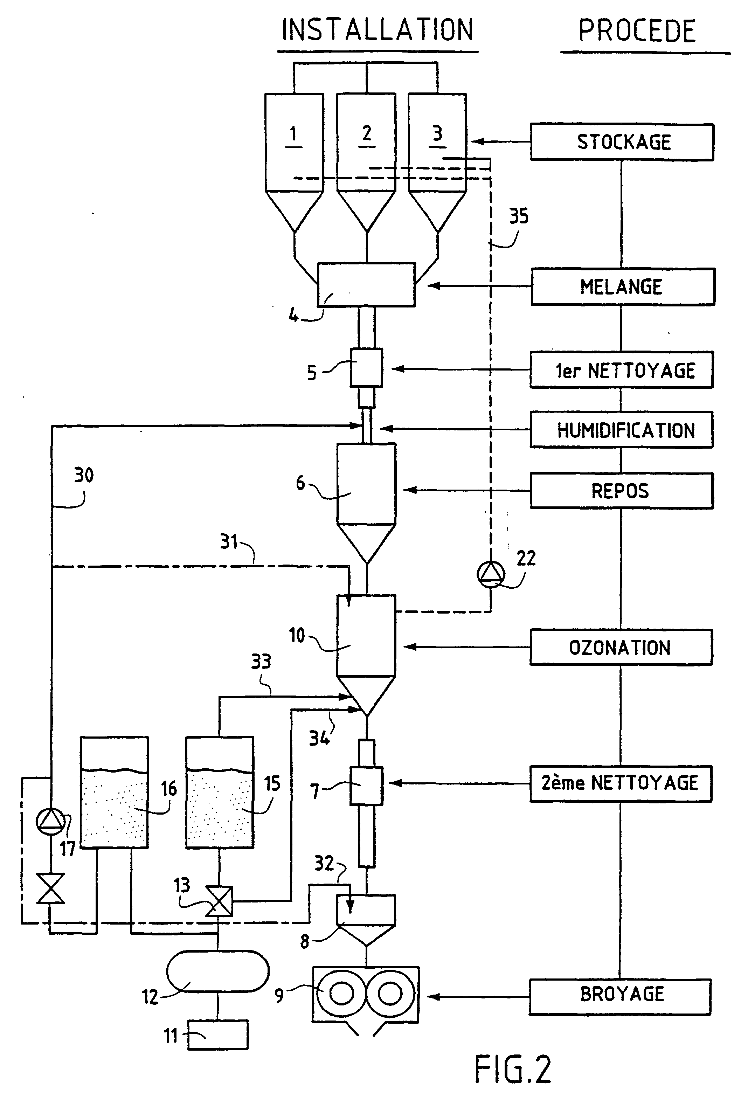

En référence à la figure 2, on décrira maintenant un procédé et une installation de fabrication de farines conformes à la présente invention.

Sur cette figure, les éléments identiques à ceux décrits précédemment en référence à la figure 1, portent les mêmes signes de référence.

Le procédé conforme à la présente invention, qui constitue un perfectionnement au procédé traditionnel de fabrication de farines qui vient d'être décrit en référence à la figure 1, est essentiellement caractérisé en ce que, préalablement ou simultanément au broyage, on met les grains en contact avec de l'ozone produit à partir d'un gaz vecteur en une quantité et pendant une durée prédéterminées.

Avantageusement, la mise en contact des grains avec l'ozone est réalisée entre la phase de repos et la phase de second nettoyage, telles qu'indiquées précédemment.

Dans le mode de réalisation représenté à la figure 2, les grains après repos, sont admis dans un réacteur 10 de traitement par l'ozone (ou réacteur de mise en contact) dont un mode de réalisation actuellement préféré sera décrit plus en détail par la suite.

Conformément à la présente invention, le réacteur 10 de mise en contact peut être alimenté indépendamment par de l'ozone sec, de l'ozone humidifié ou de l'eau ozonée.

L'ozone est produit à partir d'un gaz vecteur avantageusement constitué d'oxygène pur stocké dans un conteneur 11.

Alternativement, le gaz vecteur peut être produit à partir d'air ambiant, filtré, comprimé et séché au point de rosé compris entre -50 et -70°C.

Alternativement encore, le gaz vecteur peut être constitué d'un mélange en toute proportion d'oxygène pur et d'air filtré, comprimé et séché.

L'ozoneur 12 permet ainsi de produire un flux de gaz vecteur ozoné sec ayant un point de rosé compris entre -50 et -70°C.

Ce flux de gaz sec peut être utilisé :
- d'une part, pour alimenter directement le réacteur de mise en contact 10 d'une façon contrôlée par une vanne de réglage 13 ; ledit flux gazeux étant véhiculé jusqu'au réacteur de mise en contact par la canalisation 34 ;
- d'autre part, pour préparer un flux de gaz ozoné humidifié, également destiné à alimenter le réacteur de mise en contact 10 ; et
- enfin, pour préparer de l'eau ozonée avantageusement destinée à humidifier les grains après la première phase du nettoyage, et éventuellement à alimenter également le réacteur de mise en contact 10.

Le gaz vecteur ozoné sec produit par l'ozoneur 12 est humidifié aux conditions de température ambiante par passage au travers d'un lit liquide contenu dans une colonne d'humidification représentée par le chiffre de référence 15.

Les dimensions de cette colonne devront être calculées pour permettre une évaporation d'eau suffisante pour assurer la saturation aux conditions de pression et de température du procédé.

D'une façon générale, le rapport entre la hauteur liquide et le diamètre de la colonne peut être compris entre 1,7 et 2,5, de préférence égal à 2.

La colonne 15 comporte, à sa partie supérieure, une évacuation du gaz vecteur ozoné ainsi humidifié, qui peut être véhiculé par une canalisation 33 jusqu'au réacteur de mise en contact 10.

L'eau ozonée peut être produite à partir du gaz vecteur ozoné sec provenant de l'ozoneur 12 au moyen d'un réacteur de dissolution représenté par le chiffre de référence 16.

Dans ce réacteur, l'ozone sec est mis en contact avec une phase aqueuse sous forme de bulles dont le diamètre peut être compris entre 2 et 4 mm.

Ces bulles sont créées à l'aide de dispositifs à disques poreux, de dispositifs en "arêtes de poissons" comportant des trous calibrés, ou tout autre dispositif connu de l'homme de métier, tel qu'une turbine de dissolution, une turbine à cisaillement ou un hydroéjecteur avec dispositif de recirculation intense.

D'une façon générale, plus la concentration en ozone dissout dans l'eau sera élevée et plus le temps de résidence de l'eau dans le réacteur de dissolution 16 sera court.

Ainsi, le temps de séjour de l'eau ozonée dans le réacteur de dissolution 16 sera habituellement compris entre 2 et 12 min., de préférence entre 3 et 6 min.

Les conditions de dissolution de l'ozone dans l'eau dépendent essentiellement de la concentration en ozone dans le gaz vecteur, de la pression d'application de l'ozone, de la pression résiduelle dans le ciel gazeux, ainsi que de la taille des bulles et du régime hydrodynamique à l'interface des bulles.

L'homme de métier n'aura aucune difficulté, lors du calcul du réacteur de dissolution 16, à maximiser les paramètres favorisant le transfert gazeux vers la phase liquide, en jouant préférentiellement sur la concentration en ozone dans la phase gazeuse, en augmentant la hauteur d'eau statique dans le réacteur de dissolution, en augmentant la pression résiduelle dans le ciel gazeux, en augmentant l'aire interfaciale globale d'échange, ou en augmentant le régime hydrodynamique à l'interface gaz liquide (vitesse du fluide, turbulence).

L'eau ozonée est extraite du réacteur de dissolution 16 par une pompe 17 et peut être véhiculée :
- vers la zone d'humidification des grains, par une canalisation 30 ;
- vers le réacteur de mise en contact 10 par une canalisation 31 ; et
- éventuellement, vers le silo tampon 8 préalablement à l'étape de broyage des grains, par une canalisation 32.

L'ensemble de ces dispositifs d'alimentation en ozone sec, humidifié et en eau ozonée permet d'assurer un traitement optimal des grains, en associant un traitement par voie sèche à un traitement par voie humide.

Une telle association est par exemple préconisée dans le cadre du traitement de grains pour la préparation de farines destinées à la panification.

Dans d'autres cas, comme par exemple la préparation de farines animales, ou la préparation des farines pour les produits laitiers, un traitement par la seule voie sèche s'avère généralement satisfaisant.

L'humidification nécessaire à l'imprégnation superficielle des grains est apportée préférentiellement par l'eau ozonée servant lors de l'étape d'humidification et de façon complémentaire facultative par la pulvérisation continue réglable dans le réacteur de mise en contact 10 ainsi que par l'humidité apportée par le gaz ozoné humidifié.

L'eau ozonée extraite du réacteur de dissolution 16 peut éventuellement encore être véhiculée vers les silos de stockage 1, 2 et 3 pour une pré-humidificaùon des grains.

Il est également possible d'utiliser efficacement le résiduel d'ozone présent dans le gaz vecteur après réaction dans le réacteur de mise en contact 10, en l'extrayant par un compresseur 22 et en le véhiculant par une canalisation 35 jusqu'aux silos de stockage 1, 2 et 3.

L'ozone résiduel ainsi récupéré permet un pré-traitement des grains qui peut être avantageusement combiné avec la pré-humidification précitée.

D'une façon générale, le réacteur de mise en contact 10 peut être vertical et constitué d'un corps cylindrique ou cylindroconique à base conique comportant un dispositif interne assurant une circulation et un temps de séjour des grains dans le réacteur de mise en contact suffisants pour assurer un traitement optimal par l'ozone. La mise en contact des grains avec l'ozone peut être réalisée de façon continue ou de façon discontinue dans le réacteur. D'une façon générale :
- le temps de séjour global des grains dans le réacteur de mise en contact est habituellement compris entre 5 et 70 min., et de préférence entre 15 et 40 min.;
- le taux de recirculation interne des grains (c'est-à-dire le nombre de passages des grains dans la zone de mise en contact avec l'ozone) est habituellement de l'ordre de 10 à 40, et de préférence de 20 à 30.

La recirculation interne peut être assurée par un dispositif de type à vis d'Archimède chemisée entraîné par un dispositif électromécanique permettant d'ajuster la vitesse de rotation de la vis pour assurer avec précision le taux de recirculation requis, qui dépend également du pas et du diamètre de la vis.

Le réacteur de mise en contact 10 est habituellement muni d'un dispositif d'évacuation du gaz réactif après réaction, d'un système de pulvérisation d'eau ozonée alimenté par la canalisation 31, d'un dispositif de sécurité alimenté en eau sous pression, d'une soupape de sécurité et d'un disque de rupture.

En partie basse, le réacteur de mise en contact 10 comporte un dispositif d'introduction et de répartition du gaz ozoné conçu de telle sorte à assurer une répartition du gaz dans la masse de grains avec une vitesse d'injection suffisante pour assurer une bonne pénétration dudit gaz dans la masse à traiter.

D'une façon générale :
- la vitesse d'injection sera comprise entre 10 et 80 m.s⁻¹ de préférence entre 30 et 50 m.s⁻¹ ;
- la concentration en ozone dans le gaz vecteur sera comprise entre 80 et 160 g/m³ TPN (Température et Pression Normales), de préférence entre 100 et 120 g/m³ TPN.

Par ailleurs, la réaction d'ozonation étant de type exothermique, le corps du réacteur de mise en contact est habituellement muni d'un dispositif de refroidissement permettant de maintenir une température constante à l'intérieur dudit réacteur de mise en contact et dans le milieu réactionnel sans gradient de température vertical ou radial, et ce durant le temps nécessaire à la réaction.

Ce refroidissement efficace du réacteur de mise en contact favorise une utilisation sécuritaire de celui-ci, et permet un contrôle précis de la réaction d'ozonation.

Le dispositif de refroidissement peut être par exemple alimenté en eau froide sous pression ou par l'intermédiaire d'un circuit d'eau glacée produite par un groupe frigorifique.

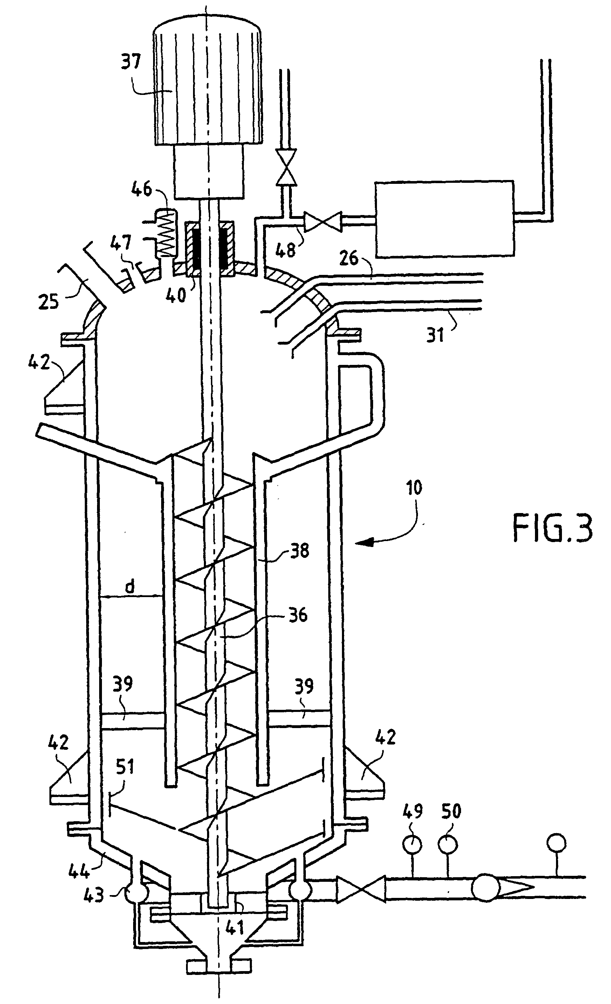

On a représenté à la figure 3, un mode de réalisation actuellement préféré d'un réacteur de mise en contact 10 spécifiquement adapté pour une mise en oeuvre optimale du procédé conforme à la présente invention.

Ce réacteur de mise en contact comporte essentiellement une vis sans fin centrale 36 entraînée par un moto-réducteur à vitesse variable 37 et entourée par une chemise centrale 38 délimitant la zone préférentielle de mise en contact des grains avec l'ozone.

La chemise centrale 38 est positionnée relativement aux parois du réacteur de mise en contact au moyen de dispositif de centrage 39 bien connu de l'homme de métier, et comporte des moyens de refroidissement permettant de refroidir la masse en réaction et d'éviter des gradients de température radiaux.

La vis centrale 36 est positionnée et centrée à l'intérieur du réacteur de mise en contact 10 par les éléments 40 et 41 connus de l'homme de l'art, respectivement positionnés à la partie supérieure et à la partie inférieure du réacteur de mise en contact et assurant l'étanchéité du réacteur.

Par ailleurs, le réacteur de mise en contact 10 comporte un élément de support 42 conçu pour supporter et bloquer le réacteur de mise en contact en annulant le couple giratoire engendré par le mouvement de la vis.

En partie basse du réacteur de mise en contact 10, au niveau du cône de fond, sont insérés des dispositifs d'injection du gaz ozoné tels que des buses représentés par le chiffre de référence 43, qui sont avantageusement disposés radialement extérieurement à la chemise 38 pour permettre une pénétration et une répartition optimales du gaz dans la masse des grains à traiter.

D'une façon générale, ces dispositifs d'injection seront disposés, radialement et extérieurement à la chemise 38, à une distance comprise entre 0.17 d et 0.8 d et de préférence entre 0.3 d et 0.67 d, où d représente la distance séparant la paroi externe de la chemise 38 de la paroi interne du réacteur de mise en contact 10.

Le nombre de buses d'injection 43 sera choisi de telle façon que la vitesse d'éjection de l'ozone soit comprise entre 10 et 80 m/s, de préférence entre 30 et 50 m/s, et ce nombre de buses sera généralement compris entre 15 et 85, de préférence entre 20 et 40.

Le corps du réacteur de mise en contact 10 ainsi que le cône de fond 44 sont avantageusement refroidis au moyen d'un dispositif de refroidissement externe qui peut être par exemple constitué par un dispositif classique de type "WATER JACKET" ou par un circuit constitué de demi-coquilles assurant la captation du flux thermique provenant de la masse réactionnelle et l'évacuant vers l'extérieur.

Ce dispositif de refroidissement sera avantageusement pourvu de moyens de contrôle tels que débitmètre, compteur etc... bien connus de l'homme de l'art.

En partie haute, le réacteur de mise en contact comporte :
- un dispositif 25 d'introduction des grains à traiter ;
- une soupape de sécurité 46 ;
- un disque d'éclatement 47 ;
- un dispositif d'extraction du gaz résiduel 48 ;
- un dispositif d'alimentation en eau (sécurité incendie) désigné par le chiffre de référence 26 ;
- un dispositif d'alimentation en eau ozonée permettant l'ajustement éventuel de l'humidité des grains durant le traitement.

Le réacteur de mise en contact 10 peut être équipé, d'une façon connue en soi, de moyens de contrôle de la température et de la pression respectivement désignés par les chiffres de référence 49 et 50.

La vis sans fin 36 est avantageusement équipée dans sa partie basse de bras racleurs 51 préférentiellement au nombre de 4, conçus et répartis pour assurer un couple constant et homogène, pour favoriser le mélange des grains, assurer leur migration vers le centre du réacteur de mise en contact et leur reprise par la vis sans fin.

Les matériaux constitutifs du corps du réacteur de mise en contact 10 seront choisis de telle sorte à assurer une résistance à l'abrasion et à l'oxydation générée par la présence d'ozone à forte concentration. Un tel matériau peut être par exemple un acier inoxydable, connu de l'homme de métier.

D'une façon générale, il a été constaté que la décontamination des grains est d'autant plus efficace que le renouvellement de l'aire intertaciale d'échange (grains-ozone réactif) était intense. et que l'accessibilité globale était maximisée.

Le réacteur de mise en contact 10 doit donc être conçu avantageusement pour répondre parfaitement à ces paramètres, en assurant un brassage efficace des grains et un taux de recirculation optimisé de ces derniers dans la zone de traitement par l'ozone.

Ce taux de recirculation dépend essentiellement du pas de la vis sans fin, de son taux de remplissage qui, lui-même, est fonction de la taille des grains et de la vitesse de rotation de la vis sans fin.

D'une façon générale, il a été constaté que les paramètres suivants conduisent aux meilleurs résultats :
- rapport "diamètre de la visidiamètre du réacteur" : compris entre 0,1 et 0,5, de préférence entre 0,25 et 0,35 ;
- rapport "pas de vis/diamètre de la vis" : compris entre 0,4 et 1,1, de préférence entre 0,6 et 0,8 ;
- taux de remplissage de la vis : compris entre 15 % et 95 %, de préférence entre 55 % et 82 % ;
- vitesse de rotation de la vis : comprise entre 50 et 200 t/mn., de préférence entre 80 et 120 t/mn, avec possibilité de variation dans cette plage pour satisfaire à la géométrie et au diamètre variable des grains à traiter ;
- rapport "hauteur utile du réacteur/diamètre du réacteur" ; compris entre 1,1 et 2, et de préférence entre 1,3 et 1,6 ;
- rapport "hauteur de la chemise/diamètre" : compris entre 1,4 et 2,2, de préférence entre 1,5 et 1,8 ;
- rapport "diamètre interne de la chemise/diamètre du réacteur" : compris entre 0,1 et 0,5, de préférence entre 0,25 et 0,35 ;
- angle du cône de base compris entre 60° et 120° ;
- rapport : "hauteur totale du réacteur/diamètre du réacteur" : compris entre 1,5 et 5, de préférence entre 2,2 et 3,2.

Les premiers essais de mise en oeuvre du procédé conforme à la présente invention ont permis de mettre en évidence une amélioration considérable sur le plan microbiologique de la qualité des farines obtenues, par comparaison à la mise en oeuvre d'un procédé traditionnel.

Ainsi, il a été constaté que le procédé conforme à la présente invention permet d'éliminer pratiquement toute contamination microbiologique en particulier en ce qui concerne la flore aérobie mésophile (F.A.M.), les Coliformes totaux, les moisissures et les levures.

On a résumé au Tableau A les résultats obtenus par les méthodes classiques d'évaluation des critères microbiologiques précités sur des échantillons témoins (procédé traditionnel) et des échantillons traités par le procédé conforme à l'invention.

Ces résultats démontrent le très haut niveau de sécurité alimentaire que le procédé conforme à la présente invention permet d'obtenir.

**TABLEAU A**

| | | | |
|---|---|---|---|
| FAM | Témoin | 22 000 000 | Abattement : 99.90 % |
| | Traité | 13 000 | |
| Coliforme totaux | Témoin | 2 800 000 | Abattement : 99.90 % |
| | Traité | 900 | |
| Moisissures | Témoin | 80 000 | Abattement : 99.85 % |
| | Traité | 120 | |
| Levures | Témoin | 200 000 | Abattement : 99.80 % |
| | Traité | 310 | |

D'autres essais ont également été réalisés pour évaluer l'influence du procédé conforme à la présente invention sur la destruction des mycotoxines et en particulier de l'ochratoxine A du blé.

Les résultats obtenus par HPLC équipé d'une détection fluorimétrique entre un lot témoin et un lot traité par le procédé conforme à l'invention sont les suivants :
- Lot témoin : 39,80 µg/kg
- Lot traité : 2,5 µg/kg
ce qui correspond à une diminution de l'ordre de 94% permettant d'obtenir un produit parfaitement satisfaisant du point de vue des normes de qualité alimentaire exigées (Norme : 5 µg/kg).

D'autres essais ont également démontré l'intérêt du procédé conforme à la présente invention sur la diminution des polluants provenant de l'utilisation de pesticides.

On a ainsi observé une diminution d'environ 80% de la teneur en Chlorpyriphosméthyl (pesticide généralement utilisé dans le cas du blé) conduisant ainsi de façon sûre à un produit parfaitement acceptable du point de vue des normes alimentaires en vigueur.

Pour mettre en évidence les qualités technologiques des farines obtenues par le procédé de l'invention, on a utilisé des tests classiques de panification, tels que la détermination du volume, du lissage, de l'élasticité, de la porosité, de la fermeté, du collant, de la couleur et de l'absorption d'eau.

On a ainsi évalué les caractéristiques des 5 lots de panification suivants :
- 2 lots témoins dont les grains n'ont pas été traités à l'ozone (lots No. 1 et 2);
- 1 lot ozoné à un taux de 5g/kg de grains immédiatement après humidification, puis laissé au repos 24 heures avant mouture (lot No. 3) ;
- 2 lots préalablement humidifiés, laissés au repos 24 heures, puis ozonés, l'un à un taux de 5g/kg de grains et l'autre à un taux de 4g/kg de grains (lots No. 4 et 5 respectivement).

Pour ce faire, on a tout d'abord pris en compte les trente critères suivants regroupés en 3 classes :

### 1) Pâte

- pétrissage : consistance, tenue, lissage à 10°, lissage, collant
- façonnage : extensibilité, élasticité, fermeté, déchirement, collant
- apprét : activité, collant, tenue mise au four (mini - maxi)

### 2) Pain

- croûte : couleur, épaisseur, croustillant
- coupe de lame : grigne (mini - maxi), régularité (mini - maxi), déchirement (mini - maxi) :
- développement : section transversale (mini - maxi), volume

### 3) Mie

- couleur
- alvéolage
- élasticité
- odeur/saveur

On a utilisé une notation de 0 à 5 pour chaque critère. On a trouvé que les critères des lots selon l'invention (3 à 5) étaient comparables pour l'ensemble aux critères des lots témoins.

On a ensuite utilisé un autre critère d'évaluation qui est le rapport P/L issu de l'alvéogramme classique de Chopin.

La Demanderesse a observé qu'en effectuant un traitement avec l'ozone des grains avant mouture, les pâtes fabriquées à partir des farines obtenues par le procédé de l'invention présentaient un alvéogramme complètement modifié.

Les résultats obtenus ont montré que l'accroissement de la zone d'ozone appliquée lors du traitement des grains est parfaitement corrélé à un accroissement de la ténacité et à une diminution de l'extensibilité.

Ainsi, grâce au procédé de l'invention, il est possible de choisir et de piloter l'accroissement du rapport P/L pour une farine donnée par le choix du taux de traitement des grains par l'ozone ainsi que par l'humidification préalable des grains par l'eau, l'eau ozonée ou un mélange des deux.

Tout particulièrement, selon la variété ou les conditions climatiques, il est ainsi possible d'améliorer la qualité de la farine (comme dans le cas d'une farine trop extensible).

Les résultats ont également mis en évidence le fait qu'en utilisant une farine obtenue à partir de grains préalablement traités par de l'eau ozonée :
- la pâte utilisée pour la fabrication de produits qui ne gonflent pas trop lors de la cuisson, tels que les produits sucrés du type cake anglais ou génoise, ne redescend pas après cuisson, et ne présente pas le phénomène caractéristique d'effondrement souvent constaté. La quantité d'ozone utilisée est de préférence d'au moins 8 à 20g d'ozone/kg de grains, une quantité de 10g d'ozone/kg de grains étant avantageusement préférée ;
- les mixes pour enrobages (tels que les beignets, panure....) ne présentent pas les inconvénients observés lors de l'utilisation de farines classiques qui sont la formation de cloques et de fissures à la surface des produits. Au contraire, la surface des mixes obtenus selon la présente invention présente un aspect monolithique homogène, sans cloquage, du fait de la possibilité de laisser fuser vers la surface les gaz de cuisson emprisonnés, de sorte que l'aspect visuel est considérablement amélioré ;
- les pâtes utilisées pour la fabrication industrielle de pâtes et de produits de panification, naturellement trop extensibles, sont capables d'absorber un volume d'eau supérieur aux conditions habituelles. La quantité d'ozone utilisée est de préférence de 3g d'ozone/kg de grains.

Enfin, il a été observé qu'il était possible d'améliorer l'alvéométrie sans modification substantielle du W (rapport P/L) des pâtes fabriquées à partir des farines issues de grains préalablement traités par un gaz ozoné par voie sèche ou humide, ou après une humidification préalable à l'eau ou à l'eau ozonée, et pour un taux de traitement compris entre 2 et 8g d'ozone/kg de grains, de préférence entre 3 et 5g/kg de grains.

Le procédé qui vient d'être décrit présente de très nombreux avantages parmi lesquels on citera notamment :
- la simplicité de mise en oeuvre, puisque ce procédé s'intègre parfaitement aux procédés et installations de fabrication de farines couramment utilisés :
- la sécurité alimentaire des farines obtenues ; l'association d'un traitement par voie sèche et par voie humide permettant d'éviter la reviviscence des souches présentes à la périphérie du tégument lors de la phase de repos, tout en conservant, voire en améliorant, les qualités technologiques des farines obtenues.

Ce procédé permet en outre l'obtention de sous-produits de mouture (sons) exempts de contamination, et dont on a constaté que la digestibilité s'en trouve améliorée.

## Revendications

1. Procédé de fabrication de farines présentant un haut niveau de sécurité alimentaire comprenant le broyage de grains préalablement nettoyés et humidifiés, **caractérisé en ce que**, préalablement ou simultanément audit broyage, on met lesdits grains en contact avec de l'ozone produit à partir d'un gaz vecteur, de préférence en une quantité comprise en 0,5 et 20 exprimée en grammes d'ozone par kilo de grains, et **en ce que** l'eau servant à l'humidification des grains est préalablement traitée par de l'ozone.

2. Procédé selon la revendication 1, **caractérisé en ce que** la durée de mise en contact des grains avec l'ozone est comprise entre 5 et 70 min, et de préférence entre 15 et 40 min.

3. Procédé selon la revendication 1 ou 2, **caractérisé en ce que** l'ozone utilisé est produit à partir d'un gaz vecteur sec et **en ce que** la concentration de l'ozone dans le gaz vecteur est comprise entre 80 et 160 g/m³ TPN, et de préférence entre 100 et 120 g/m³ TPN

4. procédé selon l'une des revendications 1 à 3, **caractérisé en ce que** la pression du gaz vecteur ozoné lors de la mise en contact avec les grains est comprise entre 200 et 500 mbar.

5. Procédé selon l'une des revendications 1 à 4, **caractérisé en ce que** l'ozone utilisé est produit à partir d'un gaz vecteur sec et d'un gaz vecteur humidifié.

6. Procédé selon l'une des revendications 1 à 5, **caractérisé en ce que** la mise en contact des grains avec l'ozone est réalisée de façon continue ou de façon discontinue dans un réacteur de mise en contact vertical comportant un dispositif de recirculation interne des grains.

7. Installation pour la mise en oeuvre du procédé de fabrication de farines selon l'une des revendications 1 à 6, **caractérisée en ce qu'**elle comporte :
- des moyens de stockage (1, 2, 3) et éventuellement de mélange (4) des grains ;
- des premiers moyens (5) de nettoyage des grains ainsi stockés et éventuellement mélangés ;
- des moyens d'humidification des grains par de l'eau préalablement traitée par de l' ozone ;
- des moyens de mise en repos (6) des grains ainsi humidifiés ;
- des seconds moyens (7) de nettoyage des grains après repos ;
- des moyens de broyage (9) des grains, et
- des moyens (10) de mise en contact des grains avec de l'ozone produit à partir d'un gaz vecteur, disposés en amont ou au niveau des moyens de broyage.

8. Installation selon la revendication 7, **caractérisée en ce qu'**elle comporte un moyen de dissolution (16) permettant de produire l'eau ozonée servant à l'humidification des grains à partir d'un gaz vecteur ozoné sec produit par un ozoneur (12).

9. Installation selon l'une des revendications 7 ou 8, **caractérisée en ce que** les moyens de mise en contact des grains avec l'ozone précité sont disposés en amont des moyens de broyage et comportent un réacteur (10) de mise en contact vertical comportant un dispositif de recirculation interne des grains constitué de préférence par une vis sans fin (36) entourée par une chemise (38).

10. Utilisation de farines obtenues par le procédé selon l'une des revendications 1 à 6, pour la fabrication de produits sucrés du type cake anglais ou génoise.

11. Utilisation selon la revendication 10, **caractérisée en ce que** la quantité d'ozone utilisée est de 8 à 20g/kg de grains, et de préférence de 10g/kg de grains.

12. Utilisation de farines obtenues par le procédé selon l'une des revendications 1 à 6, pour la fabrication industrielle de pâtes et produits de panification.

13. Utilisation selon la revendication 12, **caractérisée en ce que** la quantité d'ozone utilisée est de 3g/kg de grains.

## Patentansprüche

1. Verfahren zur Herstellung von Mehlen mit einem hohen Niveau an Lebensmittelsicherheit, umfassend das Zerkleinern der zuvor gesäuberten und befeuchteten Körner, **dadurch gekennzeichnet, dass** die Körner vor oder gleichzeitig mit dem Zerkleinern mit Ozon in Kontakt gebracht werden, das aus einem Vektorgas hergestellt wurde, vorzugsweise in einer Menge zwischen 0,5 und 20, ausgedrückt in Gramm Ozon pro Kilogramm Körner, und dadurch, dass das Wasser, das zur Befeuchtung der Körner dient, vorher mit Ozon behandelt wurde.

2. Verfahren nach Anspruch 1, **dadurch gekennzeichnet, dass** die Dauer des Inkontaktbringens der Körner mit dem Ozon zwischen 5 und 70 min und vorzugsweise zwischen 15 und 40 min liegt.

3. Verfahren nach Anspruch 1 oder 2, **dadurch gekennzeichnet, dass** das verwendete Ozon aus einem trockenen Vektorgas hergestellt wird und dass die Ozonkonzentration in dem Vektorgas zwischen 80 und 160 g/m³ TPN und vorzugsweise zwischen 100 und 120 g/m³ TPN liegt.

4. Verfahren nach einem der Ansprüche 1 bis 3, **dadurch gekennzeichnet, dass** der Druck des ozonisierten Vektorgases beim Inkontaktbringen mit den Körnern zwischen 200 und 500 mbar liegt.

5. Verfahren nach einem der Ansprüche 1 bis 4, **dadurch gekennzeichnet, dass** das verwendete Ozon aus einem trockenen Vektorgas und einem befeuchteten Vektorgas hergestellt wurde.

6. Verfahren nach einem der Ansprüche 1 bis 5, **dadurch gekennzeichnet, dass** das Inkontaktbringen der Körner mit dem Ozon in einem Reaktor zum vertikalen Inkontaktbringen, umfassend eine Vorrichtung zur erneuten internen Zirkulation der Körner, kontinuierlich oder nicht kontinuierlich durchgeführt wird.

7. Anlage zum Durchführen des Herstellungsvorgangs von Mehlen nach einem der Ansprüche 1 bis 6, **dadurch gekennzeichnet, dass** sie umfasst:
- eine Lagervorrichtung (1, 2, 3) und gegebenenfalls eine Vorrichtung (4) zum Mischen der Körner;
- eine erste Vorrichtung (5) zur Reinigung der Körner, die auf diese Weise gelagert und gegebenenfalls gemischt wurden;
- eine Vorrichtung zum Befeuchten der Körner mit Wasser, das zuvor mit Ozon behandelt wurde;
- eine Vorrichtung zum Ruhen lassen (6) der so befeuchteten Kömer;
- eine zweite Vorrichtung zur Reinigung der Kömer (7) nach dem Ruhen;
- eine Vorrichtung zum Zerkleinern der Körner (9), und
- eine Vorrichtung zum Inkontaktbringen (10) der Körner mit aus Vektorgas hergestelltem Ozon, die sich oberhalb oder auf gleicher Höhe mit der Vorrichtung zur Zerkleinerung befindet.

8. Anlage nach Anspruch 7, **dadurch gekennzeichnet, dass** sie eine Vorrichtung zum Auflösen (16) umfasst, mit der Ozonwasser hergestellt werden kann zur Befeuchtung der Körner, ausgehend von einem ozonisierten, trockenen Vektorgas, das mit einem Ozongenerator (12) hergestellt wurde.

9. Anlage nach Anspruch 7 oder 8, **dadurch gekennzeichnet, dass** sich die Vorrichtung zum Inkontaktbringen der Körner mit dem vorstehend genannten Ozon oberhalb der Vorrichtung zur Zerkleinerung befindet und einen Reaktor (10) zum vertikalen Inkontaktbringen umfasst, der eine Vorrichtung zur erneuten internen Zirkulation der Körner umfasst, die vorzugsweise aus einem Schneckengewinde (36), das von einer Ummantelung (38) umgeben ist, besteht.

10. Verwendung von Mehlen, die mit dem Verfahren nach einem der Ansprüche 1 bis 6 erhalten wurden, zur Herstellung von gesüßten Erzeugnissen der Art englischer Teekuchen oder Biskuitkuchen.

11. Verwendung nach Anspruch 10, **dadurch gekennzeichnet, dass** die Menge des verwendeten Ozons bei 8 bis 20 g/kg Körnern und vorzugsweise bei 10 g/kg Körnern liegt.

12. Verwendung der Mehle, die mit dem Verfahren nach einem der Ansprüche 1 bis 6 erzeugt wurden, zur industriellen Herstellung von Nudeln und Erzeugnissen zur Brotherstellung.

13. Verwendung nach Anspruch 12, **dadurch gekennzeichnet, dass** die verwendete Ozonmenge 3 g/kg Körner beträgt.

## Claims

1. A method for making flours having a high food safety level comprising the grinding of grains previously cleaned and moistened, **characterized in that**, prior to or simultaneously with the said grinding, the said grains are brought into contact with ozone produced from a carrier gas, preferably in a quantity of between 0.5 and 20 expressed in grams of ozone per kilo of grains, and **in that** the water used for moistening the grains is treated beforehand with ozone.

2. The method as claimed in claim 1, **characterized in that** the period during which the grains are brought into contact with the ozone is between 5 and 70 min, and preferably between 15 and 40 min.

3. The method as claimed in claim 1 or 2, **characterized in that** the ozone used is produced from a dry carrier gas and **in that** the concentration of ozone in the carrier gas is between 80 and 160 g/m³ STP, and preferably between 100 and 120 g/m³ STP.

4. The method as claimed in one of claims 1 to 3, **characterized in that** the pressure of the ozone-containing carrier gas during the bringing into contact with the grains is between 200 and 500 mbar.

5. The method as claimed in one of claims 1 to 4, **characterized in that** the ozone used is produced from a dry carrier gas and from a moistened carrier gas.

6. The method as claimed in one of claims 1 to 5, **characterized in that** the bringing of the grains into contact with the ozone is carried out continuously or batchwise in a vertical contact reactor comprising a device for internal recirculation of the grains.

7. An installation for carrying out the method for making flours as claimed in one of claims 1 to 6, **characterized in that** it comprises:
- means of storage (1, 2, 3) and optionally of mixing (4) the grains;
- first means (5) of cleaning the grains thus stored and optionally mixed;
- means of moistening the grains by water treated beforehand with ozone;
- means of resting (6) the grains thus moistened;
- second means (7) of cleaning the grains after resting;
- means of grinding (9) the grains, and
- means (10) of bringing the grains into contact with ozone produced from a carrier gas, arranged upstream or at the level of the grinding means.

8. The installation as claimed in claim 7, **characterized in that** it comprises dissolving means (16) for the production of ozonated water used for moistering grains starting from a dry ozone-containing carrier gas produced by an ozonizer (12).

9. The installation as claimed in claim 7 or 8, **characterized in that** the means of bringing the grains into contact with the ozone mentioned above are arranged upstream of the grinding means and comprise a vertical contact reactor (10) comprising a device for internal recirculation of the grains preferably consisting of an endless screw (36) surrounded by a jacket (38).

10. The use of the flours obtained by the method as claimed in one of claims 1 to 6, for making sweetened products of the English or Genoese fruitcake type.

11. The use as claimed in claim 10, **characterized in that** the quantity of ozone used is 8 to 20 g/kg of grains, and preferably 10g/kg of grains.

12. The use of flours obtained by the method as claimed in one of claims 1 to 6, for the industrial manufacture of doughs and breadmaking products.

13. The use as claimed in claim 12, **characterized in that** the quantity of ozone used is 3g/kg of grains.
